# EUROPÄISCHE PATENTSCHRIFT

(11) **EP 0 629 270 B1**
(45) Veröffentlichungstag und Bekanntmachung des Hinweises auf die Patenterteilung: **12.03.1997**
(21) Anmeldenummer: 93901626.7
(22) Anmeldetag: 07.01.1993
(51) Int. Cl.: F16L 55/033, F16L 3/10

(54) **HALTERUNG ZUR ELASTISCHEN FIXIERUNG VON LANGGESTRECKTEM MATERIAL, INSBESONDERE VON ROHREN**
SUPPORT FOR ELASTICALLY SECURING ELONGATED ITEMS, ESPECIALLY PIPES
ATTACHE PERMETTANT DE FIXER DE MANIERE ELASTIQUE DES PRODUITS ALLONGES, NOTAMMENT DES TUYAUX

(43) Veröffentlichungstag der Anmeldung: 21.12.1994
(73) Patentinhaber: SEBERT, Karl, D-7312 Kirchheim (DE)
(72) Erfinder: SEBERT, Karl, D-7312 Kirchheim (DE)
(74) Vertreter: Vetter, Hans, Dipl.-Phys. Dr.
(86) Internationale Anmeldenummer: DE9300009
(87) Internationale Veröffentlichungsnummer: WO9416260

(56) Entgegenhaltungen:
- EP-A- 0 230 553
- DE-A- 3 025 601
- DE-A- 3 907 067
- FR-A- 2 457 403
- US-A- 4 338 707
- US-A- 4 784 363

## Beschreibung

Die Erfindung betrifft eine Halterung zur elastischen Fixierung von langgestrecktem Material, insbesondere von Rohren, mit einem elastischen, das langgestreckte Material klemmend in einer Durchgangsöffnung aufnehmenden Halteteil, das einen von der Durchgangsöffnung radial nach außen verlaufenden, ein Überstülpen über das langgestreckte Material gestattenden schlitzartigen Durchbruch aufweist, und mit einer das Halteteil wenigstens teilweise umgreifenden Fixierhalterung, die zur Befestigung des Halteteiles an einem Anbringungsort wenigstens zwei Befestigungsstellen aufweist.

Bei einer solchen, beispielsweise aus der DE-PS 39 07 067 bekannten Halterung wird ein elastisches, als Einsatzteil ausgebildetes Halteteil zunächst um das zu fixierende Rohr herumgestülpt, und anschließend wird dann eine im wesentlichen U-förmig ausgebildete Fixierhalterung darübergeschoben und am Anbringungsort angeschraubt. Ein Nachteil der bekannten Anordnung besteht darin, daß zur Montage zwei unabhängige Teile erforderlich sind, die erst nach dem Überstülpen über das Rohr ineinandergeschoben werden können. Hierdurch wird die Montage erschwert, insbesondere an schwer zugänglichen Stellen. Zudem besteht die Gefahr, daß die U-förmige Fixierhalterung nicht exakt genug über das Halteteil übergeschoben worden ist, so daß dieses beispielsweise durch Vibrationen des Rohres wieder seitlich herausrutschen kann. Vor allem an schwer zugänglichen Stellen kann oft nicht mit ausreichender Sicherheit geprüft werden, ob die Fixierhalterung exakt über dem Halteteil angeordnet ist.

Eine Aufgabe der vorliegenden Erfindung besteht daher darin, eine Halterung der eingangs genannten Gattung zu schaffen, die leichter, schneller und sicherer montierbar ist.

Diese Aufgabe wird erfindungsgemäß dadurch gelöst, daß die Fixierhalterung aus zwei separaten am Halteteil dauernd fixierten Fixierelementen besteht, die jeweils wenigstens eine der Befestigungsstellen aufweisen, wobei der schlitzartige Durchbruch zwischen den beiden Fixierelementen angeordnet ist.

Die erfindungsgemäße Halterung besteht somit praktisch aus nur einem zusammenhängenden Teil, das über das zu fixierende Rohr o.dgl. gestülpt und dann unmittelbar fixiert werden kann. Durch die zwei separaten Fixierelemente können diese aus stabilem Material, beispielsweise aus Metall, bestehen, und dennoch kann das Halteteil elastisch über das Rohr gestülpt werden. Nach dem Überstülpen befinden sich die Befestigungsstellen der beiden Fixierelemente automatisch in der Montageposition. Durch die dauernde Fixierung ist ein Verschieben oder Verrutschen des Halteteiles in der Fixierhalterung ausgeschlossen. Eine unkorrekte Montage ist nicht mehr möglich. Hierdurch gewährleistet die erfindungsgemäße Halterung nicht nur eine exakte und korrekte Montage selbst bei wenig qualifiziertem Montagepersonal, sondern diese Halterung ist auch noch an schwer zugänglichen Stellen leichter montierbar. Da die Halterung nur aus einem zusammenhängenden Teil besteht, vereinfacht und verbilligt sich die Lagerhalterung.

Durch die in den Unteransprüchen aufgeführten Maßnahmen sind vorteilhafte Weiterbildungen und Verbesserungen der im Anspruch 1 angegebenen Halterung möglich.

Die beiden separaten Fixierelemente sind zweckmäßigerweise bandartig im Bereich des Außenumfanges des Halteteiles angeordnet und können somit als einfache Biegeteile aus einem Bandmaterial hergestellt werden. Dabei sind die Befestigungsstellen als in die Ebene der Anlagefläche des Halteteiles am Anbringungsort abgewinkelte Befestigungslaschen ausgebildet, die nach außen oder unter das Halteteil abgewinkelt sein können. Die Fixierelemente können somit als einfache L-, Z- oder U-förmige Biegeteile hergestellt werden.

Zur einfachen und sicheren Befestigung sind die Befestigungslaschen mit Befestigungslöchern oder -schrauben versehen.

Die dauernde Fixierung der Fixierelemente am Halteteil erfolgt in einfacher und kostengünstiger Weise dadurch, daß diese Fixierelemente am Außenumfang angeklebt oder anvulkanisiert sind. Sie können jedoch auch wenigstens teilweise in das Halteteil eingreifen und dort verklebt oder anvulkanisiert sein. Dabei können sie bis auf die Befestigungsstellen vollständig innerhalb des Halteteiles verlaufen, wodurch eine sicherere Fixierung erreicht wird oder sie können zum Teil in das Halteteil eingreifen, wobei ein nicht im Halteteil verlaufender Bereich der Fixierelemente am Außenumfang des Halteteiles angeklebt oder anvulkanisiert ist.

Eine konstruktiv besonders günstige Ausführung besteht darin, daß das Halteteil im wesentlichen rechteckig ausgebildet ist, und daß die Fixierelemente entlang der beiden senkrecht zur Anlagefläche des Halteteiles am Anbringungsort angeordneten Außenseiten verlaufen und abgewinkelte Endbereiche aufweisen, die entlang der der Anlagefläche gegenüberliegenden Außenseite des Halteteiles gegeneinander verlaufen, wobei ein Abstand dazwischen verbleibt. Der schlitzartige Durchbruch verläuft dabei zweckmäßigerweise zur Anlagefläche des Halteteiles am Anbringungsort hin. Hierdurch läßt sich das Halteteil mit Hilfe der Fixierelemente leicht aufweiten und um das Rohr herumlegen, während im montierten Zustand der schlitzartige Durchbruch stabil zwischen den Befestigungslaschen der Fixierelemente fixiert ist und sich nicht aufweiten kann. Ein Herausrutschen des Rohres oder eines anderen langgestreckten Materials ist daher ausgeschlossen.

Liegen mehrere zu fixierende Rohre vor, so können die mit den Fixierelementen versehenen Halteteile übereinander angeordnet sein, wobei jeweils die abgewinkelten Befestigungslaschen am Fixierelement des oberen Halteteiles mit den abgewinkelten Endbereichen des unteren Halteteiles verbunden sind.

Liegen verschieden große Rohre vor, so kann das jeweils obere Halteteil kleiner als das untere Halteteil ausgebildet sein und nach außen abgewinkelte Befestigungslaschen aufweisen, die jeweils mit den abgewinkelten Endbereichen der Fixierelemente des darunterliegenden Halteteiles verschraubt werden.

Soll eine große Zahl von im wesentlichen gleich dicken Rohren nebeneinander fixiert werden, so können die übereinander angeordneten Halteteile im wesentlichen die gleiche Größe aufweisen und nach innen abgewinkelte Befestigungslaschen besitzen. Die Länge der Befestigungsschrauben entspricht dann wenigstens der Gesamthöhe der übereinander angeordneten Halteteile, wobei diese Befestigungsschrauben alle übereinander angeordneten Befestigungslaschen und Endbereiche durchdrängen. Man muß daher lediglich die langen Befestigungsschrauben durch die alle übereinander angeordneten Halteteile hindurchstecken und mittels einer Mutter o.dgl. fixieren. Derartige Anordnungen können auch in beliebiger Weise nebeneinander angeordnet sein.

Zur Erhöhung der Befestigungssicherheit ist jeweils zwischen übereinander angeordneten Halteteilen eine Zwischenplatte angeordnet.

Ausführungsbeispiele der Erfindung sind in der Zeichnung dargestellt und in der nachfolgenden Beschreibung näher erläutert. Es zeigen:
- Figur 1: eine Schnittdarstellung einer Halterung mit außen am Halteteil fixierten Fixierelementen,
- Figur 2: einen entsprechende Schnittdarstellung einer Halterung mit zum Teil im Halteteil verlaufenden Fixierelementen,
- Figur 3: eine entsprechende Schnittdarstellung einer Halterung mit überwiegend im Halteteil verlaufenden Fixierelementen,
- Figur 4: eine Schnittdarstellung einer Anordnung von vier gleich großen Halterungen in zwei Lagen und
- Figur 5: eine Schnittdarstellung von drei übereinander angeordneten Halterungen in drei abgestuften Größen.

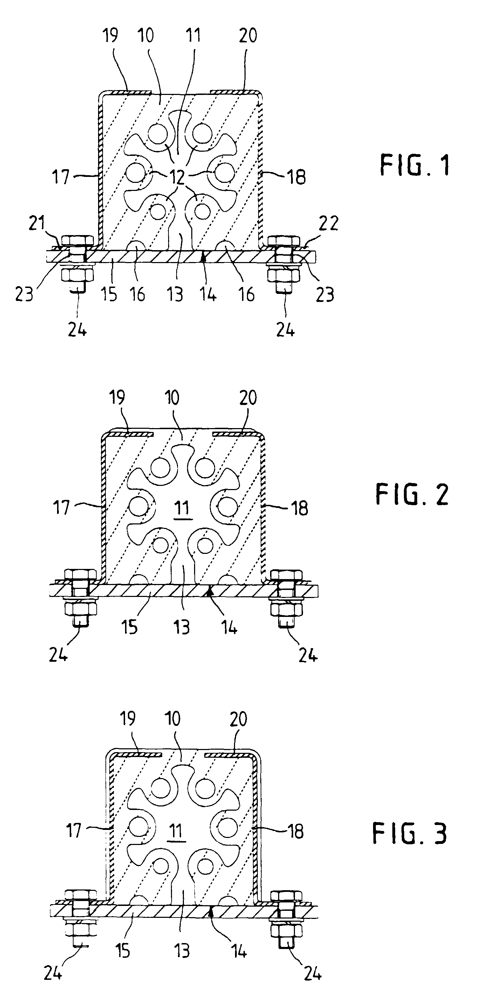

Die in Figur 1 als erstes Ausführungsbeispiel dargestellte Halterung zur elastischen Fixierung von langgestrecktem Material, beispielsweise von Rohren, Stangen, Leitungen o.dgl. besteht im wesentlichen aus einem rechteckigen Halteteil 10 aus einem elastomeren Material, wie z.B. Naturkautschuk, Neopren, elastischem Kunststoff o.dgl. und ist als zwar elastischer, jedoch im übrigen formstabiler Block ausgebildet. Im wesentlichen mittig in diesem Halteteil 10 ist eine Durchgangsöffnung 11 zur Aufnahme des langgestreckten Materials angeordnet. In diese Durchgangsöffnung 11 greifen radial von außen her sechs schlauchartige Anlageelemente 12 ein, die einstückig am Halteteil 10 angeformt sind. Diese leicht verformbaren Anlageelemente 12 liegen elastisch an einem nicht dargestellten Rohr o.dgl. an und halten dieses mittig. Die geringe Querschnittsfläche dieser Anlageelemente 12 in radialer Richtung führt zu einer guten Körperschalldämmung.

Anstelle des runden bzw. halbrunden Querschnittes dieser Anlageelemente 12 können selbstverständlich auch andere Rohrformen treten, z.B. Rohrformen mit ovalem, elliptischem, vieleckigem oder ähnlichem Querschnitt. Weiterhin ist es möglich, anstelle der rohrförmigen Ausbildung zylinderförmige, massive Formen mit entsprechenden Querschnittskonturen zu wählen, wie dies im eingangs angegebenen Stand der Technik näher beschrieben ist.

Ein schlitzartiger Durchbruch 13 verbindet die Durchgangsöffnung 11 mit einer Außenseite des Halteteiles 10, die gemäß Figur 1 die Anlageseite 14 an einer Befestigungsplatte 15 ist. An der Anlageseite 14 sind zwei halbrundförmige Nuten 16 im Halteteil 10 eingeformt, um die Anlagefläche an der Befestigungsplatte 15 zu verringern. Weitere derartige Nuten oder Ausnehmungen zur Verringerung der Anlagefläche können wie beim eingangs angegebenen Stand der Technik noch zusätzlich vorgesehen sein.

Die Befestigungsplatte 15 ist lediglich als Beispiel für einen Anbringungsort des Halteteiles 10 dargestellt. Das Halteteil 10 kann jedoch selbstverständlich an jeder beliebigen Fläche angebracht werden, beispielsweise einer Wand, einer Decke, einem Gehäuse, einem Behälter o.dgl..

Zwei bandförmige Fixierelemente 17, 18 erstrecken sich entlang der Seitenflächen des Halteteiles 10 und weisen abgewinkelte Endbereiche 19, 20 auf, die sich entlang der Oberseite des Halteteiles 10 gegeneinander erstrecken, jedoch durch einen Abstand voneinander getrennt sind. Diese Fixierelemente 17, 18 sind an diesen Außenflächen des Halteteiles 10 angeklebt oder anvulkanisiert. Gleichwirkende andere bekannte Befestigungsarten sind ebenfalls möglich.

Die bandartigen Fixierelemente 17, 18 sind in der Ebene der Anlageseite 14 nach außen abgewinkelt und bilden dort seitlich abstehende Befestigungslaschen 21, 22. Diese Befestigungslaschen 21, 22 weisen jeweils Befestigungslöcher 23 zur Aufnahme von Befestigungsschrauben 24 auf, die zur Befestigung der Befestigungslaschen 21, 22 an der Befestigungsplatte 15 dienen. Die Fixierelemente 17, 18 bestehen beispielsweise aus einem Metall wie Stahl oder Edelstahl und können aus einem entsprechenden Bandmaterial gebogen werden.

Zur Montage werden die beiden Befestigungslaschen 21, 22 auseinandergezogen, so daß sich unter elastischer Verformung des Halteteiles 10 der schlitzartige Durchbruch aufweitet. Auf diese Weise kann die gesamte Halterung über das zu fixierende Rohr geschoben werden, wobei das Halteteil 10 nach diesem Überstülpen wieder im wesentlichen seine ursprüngliche Form zurückerlangt, in der es mittels der Anlageelemente 12 am Rohr anliegt. Nun können die Befestigungslaschen 21, 22 mittels der Befestigungsschrauben 24 an der Befestigungsplatte 15 oder einem anderen Befestigungsort fixiert werden. Bei einer dickeren Wandung können anstelle der dargestellten Gewindeschrauben auch Holz- oder Blechschrauben in Verbindung mit Dübeln verwendet werden. Falls in Abhängigkeit des Durchmessers des zu fixierenden Rohres das Halteteil nach dem Überstülpen noch nicht ganz seine ursprüngliche Gestalt zurückerhalten hat, wird es beim Verschrauben noch elastisch an das Rohr angedrückt.

Das in Figur 2 dargestellte Ausführungsbeispiel entspricht weitgehend dem ersten Ausführungsbeispiel. Der einzige Unterschied besteht darin, daß die abgewinkelten Endbereiche 19, 20 in das Halteteil 10 eingreifen und dort verklebt oder ebenfalls durch Vulkanisierung befestigt sind. In diesem Falle ist es auch möglich, die mittleren vertikalen Bereiche der Fixierelemente 17, 18 nicht mit dem Halteteil 10 zu verbinden.

Das in Figur 3 dargestellte dritte Ausführungsbeispiel entspricht wiederum den ersten beiden Ausführungsbeispielen mit dem Unterschied, daß nunmehr die Fixierelemente 17, 18 mit Ausnahme der Befestigungslaschen 21, 22 im Halteteil 10 eingebettet sind. Dies kann durch Einvulkanisieren erfolgen. Die inneren Bereiche der Fixierelemente 17, 18 verlaufen dabei im wesentlichen parallel zur den Außenseiten des Halteteiles 10.

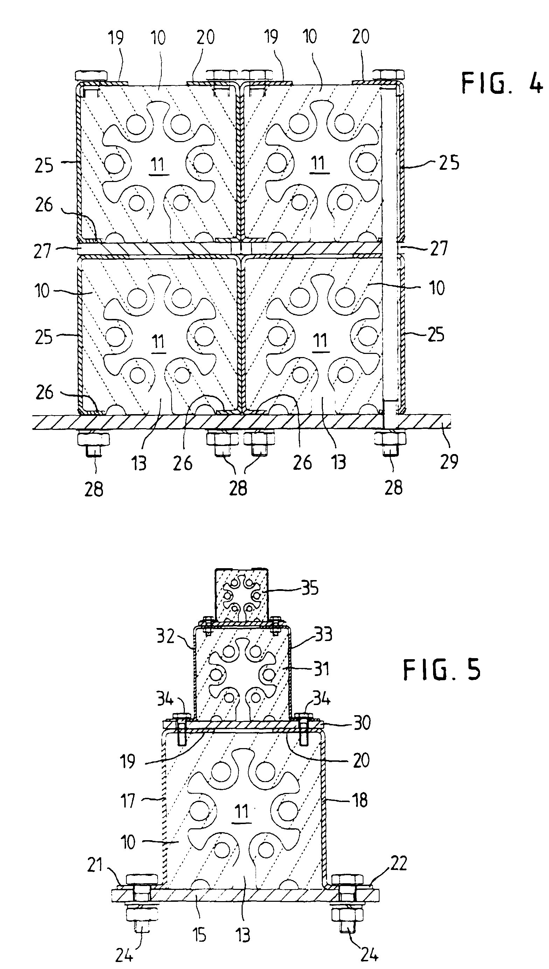

Bei dem in Figur 4 dargestellten weiteren Ausführungsbeispiel sind vier Halteteile 10 in zwei Ebenen übereinander angeordnet. Anstelle der Fixierelemente 17, 18 sind nunmehr an jedem Halteteil 10 zwei Fixierelemente 25 angeklebt oder anvulkanisiert, die Befestigungslaschen 26 aufweisen, die nach innen parallel zur Anlageseite 14 gebogen sind. Die Fixierelemente 25 haben daher eine im wesentlichen U-förmige Gestalt. Zwischen der unteren Lage von Halteteilen 10 und der oberen Lage von Halteteilen 10 sind Zwischenplatten 27 angeordnet. Vier Befestigungsschrauben 28 verlaufen durch die übereinander angeordneten Halteteile 10 und deren Befestigungslaschen 26 sowie Endbereiche 19 bzw. 20. Zur Verdeutlichung ist die rechte Befestigungsschrauben 28 vollständig dargestellt, während die übrigen Befestigungsschrauben nur angedeutet sind. Mittels dieser Befestigungsschrauben 28 ist die Anordnung von vier Halteteilen 10 an einer Befestigungsplatte 29 fixiert.

Zur Montage werden zunächst die beiden unteren Halteteile 10 über entsprechend angeordnete, jedoch nicht dargestellte Rohre gestülpt. Dann werden die Zwischenplatten 27 aufgelegt und dann die oberen Halteteile 10 über entsprechende Rohre gestülpt. Nun werden die vier Befestigungsschrauben 28 gemäß Figur 4 hindurchgesteckt und fixiert.

Die in Figur 4 dargestellte Anordnung läßt sich selbstverständlich noch in der Höhe und Breite durch weitere Lagen und Reihen von Halteteilen 10 erweitern.

Bei dem in Figur 5 dargestellten weiteren Ausführungsbeispiel sind verschieden große Halteteile bzw. Halterungen übereinander angeordnet. Die unterste Halterung entspricht dem in Figur 1 dargestellten ersten Ausführungsbeispiel. Oben auf die Befestigungslaschen 21, 22 ist eine Zwischenplatte 30 aufgelegt, und auf diese ist eine prinzipiell gleich aufgebaute, jedoch kleiner dimensionierte Halterung 31 aufgesetzt, deren Fixierelemente 32, 33 mittels Befestigungsschrauben 34 durch die Zwischenplatte 30 hindurch an den Befestigungslaschen 21, 22 fixiert sind. Darüber ist in entsprechender Weise eine weitere Halterung 35 mit noch kleinerer Dimensionierung eingeschraubt. Hierdurch können verschieden dicke Rohre o.dgl. übereinander fixiert werden.

In Abwandlung der dargestellten Ausführungsbeispiele kann auch eine andere Anzahl von Anlageelementen vorgesehen sein. Auch können die Halteteile anstelle der rechteckigen Gestalt eine andere Gestalt aufweisen, beispielsweise eine runde oder halbrunde Gestalt. Entsprechend müssen die Befestigungslaschen ausgebildet sein, die dann ebenfalls entsprechend rund am Außenumfang dieser Halteteile fixiert sind, wobei die in den Figuren 1 bis 3 aufgezeigten Möglichkeiten wahrgenommen werden können. Dabei ist es beispielsweise auch möglich, daß die abgewinkelten Endbereiche 19, 20 entweder ganz entfallen (auch bei den bisher beschriebenen Ausführungsbeispielen möglich) oder radial in die Halteteile eingreifen.

In Abwandlung der in den Figuren 1 bis 3 dargestellten Ausführungsbeispiele könnte sich der schlitzartige Durchbruch von der Durchgangsöffnung 11 aus bis zu einer Stelle des Außenumfanges des Halteteiles erstrecken, die zwischen den abgewinkelten Endbereichen 19, 20 liegt. Allerdings ist das zu haltende Rohr dann weniger geschützt. Es besteht jedoch dann die Möglichkeit, daß das Rohr lediglich durch Lockern der Schrauben und entsprechende Aufweitung der Fixierelemente 17, 18 eingesetzt oder entnommen werden kann.

## Patentansprüche

1. Halterung zur elastischen Fixierung von langgestrecktem Material, insbesondere von Rohren, mit einem elastischen, das langgestreckte Material klemmend in einer Durchgangsöffnung (11) aufnehmenden Halteteil (10), das einen von der Durchgangsöffnung (11) radial nach außen verlaufenden, ein Überstülpen über das langgestreckte Material gestattenden schlitzartigen Durchbruch (13) aufweist, und mit einer das Halteteil (10) wenigstens teilweise umgreifenden Fixierhalterung, die zur Befestigung des Halteteiles (10) an einem Anbringungsort (15; 29) wenigstens zwei Befestigungsstellen aufweist, dadurch gekennzeichnet, daß die Fixierhalterung aus zwei separaten, am Halteteil (10) dauernd fixierten Fixierelementen (17, 18; 25; 32, 33) besteht, die jeweils wenigstens eine der Befestigungsstellen aufweisen, wobei der schlitzartige Durchbruch (13) zwischen den beiden Fixierelementen (17, 18; 25; 32, 33) angeordnet ist.

2. Halterung nach Anspruch 1, dadurch gekennzeichnet, daß die Fixierelemente (17, 18; 25; 32, 33) bandartig im Bereich des Außenfumganges des Halteteiles (10) angeordnet sind.

3. Halterung nach Anspruch 2, dadurch gekennzeichnet, daß die Befestigungsstellen als in die Ebene der Anlagefläche (16) des Halteteiles (10) am Anbringungsort (15; 29) abgewinkelte Befestigungslaschen (21, 22; 26) ausgebildet sind.

4. Halterung nach Anspruch 3, dadurch gekennzeichnet, daß die Befestigungslaschen (21, 22; 26) nach Außen oder unter das Halteteil nach Innen abgewinkelt sind.

5. Halterung nach einem der vorhergehenden Ansprüche, dadurch gekennzeichnet, daß die Fixierelemente (17, 18; 25; 32, 33) am Außenumfang angeklebt oder anvulkanisiert sind oder wenigstens teilweise in das Halteteil (10) eingreifen und dort verklebt oder anvulkanisiert sind.

6. Halterung nach Anspruch 5, dadurch gekennzeichnet, daß die Fixierelemente (17, 18) bis auf die Befestigungsstellen (21, 22) innerhalb des Halteteiles (10) verlaufen oder daß ein nicht im Halteteil (10) verlaufender Bereich der Fixierelemente (17, 18) am Außenumfang des Halteteiles (10) angeklebt oder anvulkanisiert ist.

7. Halterung nach einem der vorhergehenden Ansprüche, dadurch gekennzeichnet, daß das Halteteil (10) im wesentlichen rechteckig ausgebildet ist, und daß die Fixierelemente (17, 18; 25; 32, 33) entlang der beiden senkrecht zur Anlagefläche (14) des Halteteiles (10) am Anbringungsort (15; 29; 30) angeordneten Außenseiten verlaufen und abgewinkelte Endbereiche (19, 20) aufweisen, die entlang der der Anlagefläche (14) gegenüberliegenden Außenseite des Halteteiles (10) gegeneinander verlaufen, wobei ein Abstand dazwischen verbleibt.

8. Halterung nach Anspruch 3 und 7, dadurch gekennzeichnet, daß mit den Fixierelementen (17, 18; 25; 32, 33) versehene Halteteile (10) übereinander angeordnet sind, wobei jeweils die abgewinkelten Befestigungslaschen (21, 22) am Fixierelement (17, 18; 25; 32, 33) des oberen Halteteiles (10) mit den abgewinkelten Endbereichen (19, 20) des unteren Halteteiles (10) verbunden sind.

9. Halterung nach Anspruch 8, dadurch gekennzeichnet, daß das jeweils obere Halteteil (31 bzw. 35) kleiner als das untere Halteteil (10 bzw. 31) ausgebildet ist und nach außen abgewinkelte Befestigungslaschen (21, 22) aufweist oder daß die übereinander angeordneten Halteteile (10) im wesentlichen dieselbe Größe aufweisen und nach innen abgewinkelte Befestigungslaschen (26) besitzen.

10. Halterung nach einem der vorhergehenden Ansprüche, dadurch gekennzeichnet, daß der schlitzartige Durchbruch (13) zur Anlagefläche (14) des Halteteiles (10; 31; 35) am Anbringungsort (15; 29; 30) verläuft.

11. Halterung nach einem der vorhergehenden Ansprüche, dadurch gekennzeichnet, daß die Halteteile (10; 31; 35) als formstabile, jedoch zum Überstülpen über das langgestreckte Material aufweitbare Blöcke ausgebildet sind.

12. Halterung nach einem der vorhergehenden Ansprüche, dadurch gekennzeichnet, daß an der Durchgangsöffnung (11) nach innen sich erstreckende schlauchartige Anlageelemente (12) angeformt sind.

## Claims

1. Holder for the flexible locating of elongated material, in particular pipes, with a flexible retaining part (10) which clamps the elongated material in a through hole (11), which has a slot-like opening (13) running radially outwards from the through hole (11) and allowing slipping-over the elongated material, and with a locating mount at least partially encompassing the retaining part (10) and which has at least two fastening points for fastening the retaining part (10) to an attachment point (15; 29), characterized in that the locating mount is comprised of two separate locating elements (17, 18; 25; 32, 33) permanently fixed to the retaining part (10), each of which has at least one of the fastening points, wherein the slot-like opening (13) is situated between the two locating elements (17, 18; 25; 32, 33).

2. Holder according to claim 1, characterized in that the locating elements (17, 18; 25; 32, 33) are arranged in ribbon-like form in the area of the outer circumference of the retaining part (10).

3. Holder according to claim 2, characterized in that the fastening points are in the form of securing plates (21, 22; 26) angled in the plane of the attachment surface (16) of the retaining part (10) at the attachment point (15; 29).

4. Holder according to claim 3, characterized in that the securing plates (21, 22; 26) are angled outwards, or inwards beneath the retaining part.

5. Holder according to any of the preceding claims, characterized in that the locating elements (17, 18; 25; 32, 33) are bonded or moulded onto the outer circumference or engage at least partially in the retaining part (10) and are bonded or moulded on to it.

6. Holder according to claim 5, characterized in that the locating elements (17, 18; 25; 32, 33) run within the retaining part (10) as far as the fastening points (21, 22), or that an area of the locating elements (17, 18) not running in the retaining part (10) is bonded or moulded to the outer circumference of the retaining part (10).

7. Holder according to any of the preceding claims, characterized in that the retaining part (10) is essentially rectangular in form, and that the locating elements (17, 18; 25; 32, 33) run along the two outer sides arranged at right-angles to the locating surface (14) of the retaining part (10) at the attachment point (15; 29; 30), and have angled end areas (19, 20) which run towards one another along the outer side of the retaining part (10) lying opposite the locating surface (14), with a space remaining between them.

8. Holder according to claims 3 and 7, characterized in that retaining parts (10) provided with the locating elements (17, 18; 25; 32, 33) are arranged above one another, wherein the angled securing plates (21, 22) on the locating element (17, 18; 25; 32, 33) of the upper retaining part (10) are connected to the angled end areas (19, 20) of the lower retaining part (10) in each case.

9. Holder according to claim 8, characterized in that the upper retaining part (31 and 35 respectively) in each case is smaller than the lower retaining part (10) and has outwards-angled securing plates (21, 22) or that the retaining parts (10) arranged on top of one another are essentially of the same size and have inwards-angled securing plates (26).

10. Holder according to any of the preceding claims, characterized in that the slot-like opening (13) runs towards the locating surface (14) of the retaining part (10; 31; 35) at the attachment point (15; 29; 30).

11. Holder according to any of the preceding claims, characterized in that the retaining parts (10; 31; 35) are in the form of dimensionally-stable blocks which are however expandable so as to slip over the elongated material.

12. Holder according to any of the preceding claims, characterized in that inwards-extending hose-like attachment elements (12) are moulded on to the through hole (11).

## Revendications

1. Attache pour la fixation élastique de produits allongés, notamment de tubes, comportant une partie formant support (10) élastique, logeant le produit allongé de façon serrée dans un orifice de passage (11), ladite partie présentant une interruption (13) du type fente passant de l'orifice de passage (11) radialement vers l'extérieur et permettant un recouvrement sur le produit allongé, et comportant une attache de fixation enveloppant au moins partiellement la partie formant support (10), qui présente au moins deux points de fixation pour la fixation de la partie formant support (10) à un point d'attache (15, 29), caractérisée en ce que l'attache de fixation est composée de deux éléments de fixation (17, 18 ; 25 ; 32, 33) séparés, fixés en permanence à la partie formant support (10), qui présentent chacun au moins l'un des points de fixation, l'interruption (13) du type fente étant disposée entre les deux éléments de fixation (17, 18 ; 25 ; 32, 33).

2. Attache selon la revendication 1, caractérisée en ce que les éléments de fixation (17, 18 ; 25 ; 32, 33) sont disposés en bande dans la zone du pourtour extérieur de la partie formant support (10).

3. Attache selon la revendication 2, caractérisée en ce que les points de fixation sont conçus comme des pattes de fixation (21, 22 ; 26) recourbées dans le plan de la face d'appui (16) de la partie formant support (10) au point d'attache (15 ; 29).

4. Attache selon la revendication 3, caractérisée en ce que les pattes de fixation (21, 22 ; 26) sont recourbées vers l'extérieur ou sous la partie formant support, vers l'intérieur.

5. Attache selon l'une des revendications précédentes, caractérisée en ce que les éléments de fixation (17, 18 ; 25 ; 32, 33) sont collés ou vulcanisés au pourtour extérieur ou sont ancrés au moins partiellement dans la partie formant support (10) et y sont collés ou vulcanisés.

6. Attache selon la revendication 5, caractérisée en ce que les éléments de fixation (17, 18) s'étendent, à l'exception des points de fixation (21, 22), à l'intérieur de la partie formant support (10) ou en ce qu'une zone des éléments de fixation (17, 18) ne passant pas dans la partie formant support (10) est collée ou vulcanisée au pourtour extérieur de la partie formant support (10).

7. Attache selon l'une des revendications précédentes, caractérisée en ce que la partie formant support (10) est sensiblement rectangulaire, et en ce que les éléments de fixation (17, 18 ; 25 ; 32, 33) s'étendent le long des deux côtés extérieurs disposés, au point d'attache (15 ; 29 ; 30), perpendiculairement à la face d'appui (14) de la partie formant support (10) et présentent des zones d'extrémité (19, 20) recourbées, qui s'étendent l'une vers l'autre le long du côté extérieur de la partie formant support (10) opposé à la face d'appui (14), un écart subsistant entre ces deux zones.

8. Attache selon les revendications 3 et 7, caractérisée en ce que des parties formant support (10) pourvues d'éléments de fixation (17, 18 ; 25 ; 32, 33) sont superposées, les pattes de fixation recourbées (21, 22) de l'élément de fixation (17, 18 ; 25 ; 32, 33) de la partie formant support supérieure (10) étant à chaque fois reliées aux zones d'extrémité recourbées (19, 20) de la partie formant support inférieure (10).

9. Attache selon la revendication 8, caractérisée en ce que la partie formant support respectivement supérieure (31 ou 35) est plus petite que la partie formant support inférieure (10 ou 31) et présente des pattes de fixation (21, 22) recourbées vers l'extérieur ou en ce que les parties formant support (10) superposées présentent sensiblement la même taille et possèdent des pattes de fixation (26) recourbées vers l'intérieur.

10. Attache selon l'une des revendications précédentes, caractérisée en ce que l'interruption (13) du type fente s'étend vers la face d'appui (14) de la partie formant support (10 ; 31 ; 35) au point d'attache (15 ; 29 ; 30).

11. Attache selon l'une des revendications précédentes, caractérisée en ce que les parties formant support (10 ; 31 ; 35) sont réalisées en tant que blocs indéformables, cependant élargissables pour le recouvrement du produit allongé.

12. Attache selon l'une des revendications précédentes, caractérisée en ce que, dans l'orifice de passage (11), sont formés des éléments d'appui (12) du type tuyau s'étendant vers l'intérieur.
